# EUROPÄISCHE PATENTSCHRIFT

(11) **EP 1 025 520 B1**
(45) Veröffentlichungstag und Bekanntmachung des Hinweises auf die Patenterteilung: **28.08.2002**
(21) Anmeldenummer: 98962182.6
(22) Anmeldetag: 26.10.1998
(51) Int. Cl.: G06T 17/40

(54) **VERFAHREN UND VORRICHTUNG ZUR BEARBEITUNG VON BILDOBJEKTEN**
METHOD AND DEVICE FOR PROCESSING IMAGED OBJECTS
PROCEDE ET DISPOSITIF DE TRAITEMENT D'OBJETS D'IMAGE

(30) Priorität: 30.10.1997 DE 19747881; 26.11.1997 DE 19752341
(43) Veröffentlichungstag der Anmeldung: 09.08.2000
(73) Patentinhaber: Dr. Baldeweg Aktiengesellschaft, 01307 Dresden (DE)
(72) Erfinder: BALDEWEG, Torsten, D-01778 Lauenstein (DE); BALDEWEG, Frank, D-01778 Lauenstein (DE)
(74) Vertreter: Naumann, Ulrich, Dr.-Ing.
(86) Internationale Anmeldenummer: DE9803138
(87) Internationale Veröffentlichungsnummer: WO99023586

(56) Entgegenhaltungen:
- EP-A- 0 635 805
- WO-A-91/14397
- WO-A-94/24640
- WO-A-96/13207
- WO-A-96/29667
- US-A- 4 879 668
- US-A- 5 228 443

## Beschreibung

Die Erfindung betrifft ein Verfahren zur Bearbeitung von Bildobjekten in stereoskopisch dreidimensionalen Darstellungen, wobei ein Bildobjekt durch ein Bilderzeugungsmittel in einem virtuellen Bildraum dargestellt wird, Bildpunkte des stereoskopisch dreidimensionalen Bildraums durch eine Auswahleinrichtung erreichbar sind und dem Bildobjekt durch einen Rechner der Position entsprechende Koordinatenwerte zugeordnet werden. Die Erfindung betrifft außerdem eine Vorrichtung zum Bearbeiten und Verändern von stereoskopisch dreidimensionalen Darstellungen, die einen Rechner zum Erzeugen von Bilddaten, einen Bildschirm zur stereoskopisch dreidimensionalen Darstellung der Bilddaten in einem virtuellen Bildraum und eine Zeigeeinrichtung zur manuellen Beeinflussung der stereoskopisch dreidimensionalen Darstellung aufweist. Diese Vorrichtung kann erfindungsgemäß als Auswahleinrichtung im obengenannten Verfahren eingesetzt werden.

Es sind verschiedene Verfahren zur stereoskopischen Bilddarstellung dreidimensionaler Bildobjekte bekannt. Bei der Anaglyphentechnik werden Perspektiven für das rechte und linke Auge in den Farben rot bzw. grün dargestellt. Zur Erzielung der räumlichen Wirkung ist eine Rot/Grün-Brille erforderlich. Die Anaglyphentechnik erlaubt jedoch keine Farbdarstellung.

Weiterhin ist die Shuttertechnik bekannt, bei der die jeweiligen Perspektiven für die beiden Augen nacheinander dargestellt werden. Die Kanalisierung in Bezug auf ein Auge erfolgt über eine Brille, die die Perspektiven augenrichtig zuschaltet.

Bekannt ist auch die autostereoskopische Darstellung, bei der keine zusätzliche Brille erforderlich ist. Beide Perspektiven werden gleichzeitig dargestellt. Die Kanalisierung erfolgt durch optische Mittel, wie Linsen oder Prismen. Die Betrachterbewegung wird erfaßt und über die optischen Mittel dem jeweiligen Auge zugeführt. Beide Perspektiven sind abwechselnd in den LCD-Spalten eines Bildschirms enthalten. Über Prismenmasken des Bildschirms werden die Perspektiven dem rechten bzw. dem linken Auge zugeführt. Das dreidimensionale Bild scheint vor dem Bildschirm zu schweben.

Es sind auch Auswahleinrichtungen für die Bildbearbeitung bekannt, beispielsweise eine Computer-Maus, über die einzelne Bildpunkte der Darstellung erreichbar sind. Jedoch liegt dabei die Darstellung in zweidimensionaler oder quasi dreidimensionaler Form vor, so daß die Anwahl eines Bildpunktes erschwert ist. Man behilft sich dabei durch Drehen des Bildobjekts, bis eine dahinterliegende Schicht eines dreidimensionalen Bildobjekts auf dem zweidimensionalen Bildschirm so angeordnet ist, daß der gewünschte Bildpunkt auswählbar ist. Im Zusammenhang mit den genannten dreidimensionalen Darstellungsverfahren ist diese Art der Bildbearbeitung jedoch umständlich, zeitaufwendig und ungenau.

Vorrichtungen zum Bearbeiten und Verändern von zweidimensionalen Darstellungen in Graphik- bzw. CAD-Systemen sind bekannt. Dabei werden bspw. mit einer sog. Maus, die auf der Schreibtischoberfläche mittels Rollen hin- und herbewegbar ist, Darstellungen auf einem Bildschirm eines Rechners bearbeitet. Die Bewegung der Maus gegenüber der Unterlage wird erfaßt und in Cursor-Bewegungen umgesetzt. Bei dreidimensionalen Darstellungen besteht wegen der eingeschränkten zweidimensionalen Bewegungsmöglichkeit der Maus der Nachteil, daß Bildpunkte in einem virtuellen, dreidimensionalen Bildraum, bspw. in einer dahinterliegenden Bildschicht, nur kompliziert anzuwählen sind. Meist wird die dreidimensionale Darstellung in eine zweidimensionale Ansicht zerlegt, so daß eine bestimmte Bildschicht anwählbar ist.

Aus der WO 96/29677 ist ein Verfahren und eine Vorrichtung zur Bearbeitung von Bildobjekten in dreidimensionalen Darstellungen bekannt. Die Markierung eines Bildobjekts erfolgt im Bildraum selbst. Hierzu wird ein zwei- oder dreidimensionales Bildobjekt in eine Beobachtungsebene projiziert. Die Beobachtungsebene wird gescannt und ein die Berührungsebene berührendes Objekt in seiner zweidimensionalen Position in der Beobachtungsebene erkannt.

Der Erfindung liegt die Aufgabe zugrunde, ein Verfahren und eine Vorrichtung zum Bearbeiten und Verändern von dreidimensionalen Darstellungen anzugeben, wonach eine einfache Auswahl und Bearbeitung von dreidimensionalen Bildobjekten möglich ist.

Diese Aufgabe wird bezüglich eines erfindungsgemäßen Verfahrens durch die Merkmale des Anspruchs 1 gelöst. Danach ist das in Rede stehende Verfahren zur Bearbeitung von Bildobjekten derart ausgestaltet und weitergebildet, dass zumindest ein räumlicher Teilbereich des Bildobjekts durch die Auswahleinrichtung für die Bearbeitung markiert wird, dass die Auswahleinrichtung frei im Bildraum bewegt wird und der Rechner ihr entsprechend ihrer Position einen Bildpunkt der dreidimensionalen Darstellung zuweist.

Erfindungsgemäß ist erkannt worden, daß bei dreidimensionaler, ein Bildvolumen erzeugender Darstellung die Markierung eines Bildobjekts im Bildraum selbst erfolgen kann. Im Gegensatz dazu erfolgt die Markierung bei herkömmlichen Bildschirmen mit der üblichen zweidimensionalen Darstellung durch Drehen des Körpers oder Verändern seiner Lage und anschließender zweidimensionaler oder quasi dreidimensionaler Markierung. Erfindungsgemäß wird ein in den Raum projeziertes Bildobjekt direkt in dem virtuellen Bildraum markiert. Infolge dessen kann der Bediener die Markierung des räumlichen Teilbereichs entweder durch Verändern der Position des Betrachters oder durch Verändern der Lage des Körpers einfach beobachten. Ein Rechner mit einer Vektorgrafik und verschiedenen Einund Ausgabegeräten unterstützt dabei die dreidimensionale, insbesondere autostereoskopische Darstellung, berechnet die Position der Markierung im Bildobjekt und zeigt die markierten Teilbereiche des Bildobjekts in der dreidimensionalen Darstellung an.

Das erfindungsgemäße Verfahren läßt sich besonders vorteilhaft bei der Objekterkennung und Vermessung in der Molekularphysik, bei der Inspektion und Qualitätssicherung in der Halbleiterindustrie, in der Metallurgie und der Metallverarbeitung einsetzen. Auch die Anwendung bei CAD-Verfahren, in Verbindung mit der Objekterkennung, Bilderfassung, Rekonstruktion, Darstellung und Vermessung von Bildobjekten ist vorteilhaft. Das Verfahren läßt sich für das virtuelle Prototyping (mock up) sowie in der virtuellen Werkstatt einsetzen. Weitere Anwendungsgebiete sind in der Mikrobiologie die Segmentation und Vermessung räumlicher Anordnungen, wie Zellkernstrukturen, Chromosomen usw. und in der Medizin die Zytologie, die Ophthalmologie, die Neurodiagnostik und die Angiographie.

Bei besonders vorteilhafter Weiterbildung der Erfindung wird das markierte Bildobjekt in Bezug zu anderen, im Bildraum dargestellten Bildobjekten segmentiert. Das Bildobjekt wird dabei in einzelne Abschnitte untergliedert, wobei der Rechner jeweils die Begrenzungsbereiche der Abschnitte im dreidimensionalen Raum und Daten für die Zuordnung eines Abschnitts bei der Segmentation abspeichert. Die Segmentation ist Grundlage für die bildanalytische Weiterverarbeitung der dreidimensionalen Darstellung. Dabei werden Bildvolumina in der dreidimensionalen Darstellung abgegrenzt und in Abschnitte unterteilt, die unterschiedlichen Bildbearbeitungsvorgängen zugänglich sind. Dabei wird insbesondere die Morphometrie, d.h. die Segmentation und Vermessung von 3D-Bildobjekten in dreidimensionalen Bildern, unterstützt.

Bei der Markierung oder der Segmentierung wird die Auswahleinrichtung im virtuellen Bildraum auf das Bildobjekt gerichtet oder entlang der Begrenzungsbereiche des Bildobjekts geführt. Das auf diese Weise markierte Bildobjekt kann hervorgehoben, insbesondere gefärbt oder vergrößert werden. Dadurch ist der ausgewählte räumliche Teilbereich in der dreidimensionalen Darstellung besser erkennbar.

Bei einer anderen Weiterbildung der Erfindung wird der markierte räumliche Teilbereich des Bildobjekts vermessen. Gerade im medizinischen Bereich, wo verschiedene bildgebende Verfahren wie die Laser-Tomographie, die Röntgen-Tomographie und die MR-Tomographie oder Darstellungen aus der Mikroskopie verwendet werden, lassen sich daraus dreidimensionale Darstellungen erzeugen. Um Bildobjekte im Bildraum zu vermessen, müssen zumindest zwei Bildpunkte oder vorzugsweise räumliche Teilbereiche eines Bildobjekts markiert werden. Auf diese Weise können die Einzelinformationen der bekannten zweidimensionalen oder quasi dreidimensionalen Darstellungen in der dreidimensionalen Darstellung verwendet werden und mit Hilfe der autostereoskopischen Darstellung unter geringem Aufwand im Bildraum vermessen werden. Vorteilhaft wird die Genauigkeit bei der Vermessung erhöht und der Analyse- bzw. Diagnosevorgang objektiviert. Bevorzugt kann der markierte Teilbereich des Bildobjekts aus der dreidimensionalen Darstellung ausgeschnitten und gesondert dargestellt werden.

Das Bildobjekt kann durch Verarbeitungsprozeduren des Rechners automatisch segmentiert und/oder vermessen werden; dazu werden Daten bevorzugt zur Erzeugung von Referenzobjekten in einer Speichervorrichtung des Rechners abgelegt. Aufgrund der Referenzobjekte wird dann eine automatische Segmentation und Vermessung relevanter Bildobjektbereiche im dreidimensionalen Bildraum durchgeführt. Bei der Segmentation, Vermessung oder Auswahl eines spezifischen Bildobjekts in der Darstellung können bildanalytische, kognitive und wissensbasierte Systeme, insbesondere auch Neuronale Netze, eingesetzt werden. Durch die automatische Segmentation, beispielsweise der Segmentierung einer Leber innerhalb einer medizinischen, dreidimensionalen Darstellung eines Patientenkörpers, kann die Performance erhöht und der Analyse-/Diagnoseprozeß objektiviert werden.

Die manuelle Segmentation bzw. Vermessung relevanter Teilbereiche eines Bildobjekts im dreidimensionalen Bildraum kann zur Vorbereitung des automatisierten Verfahrens oder zur Verifikation herangezogen werden. Bei der automatischen Segmentation aufgrund von Referenzobjekten, beispielsweise Objekten einer bestimmten Größe, Schattierung oder Form, kann eine Vorauswahl in der dreidimensionalen Darstellung durch Verarbeitungsprozeduren des Rechners erfolgen und eine manuelle Nachbearbeitung mit Hilfe der Auswahleinrichtung oder über die Tastatur des Rechners durchgeführt werden.

Der Rechner kann Verarbeitungsprozeduren wie ein Vorverarbeiten durch Filtern, Bilddatenerzeugung oder Bilddatenkomprimierung bereitstellen. Ebenso können die Verarbeitungsprozeduren ein kognitives Modellieren, Kalibrieren oder morphometrisches Auswerten der dreidimensionalen Darstellung vorsehen. Durch die Verarbeitungsprozeduren kann die dreidimensionale Darstellung derart verändert werden, bis für das spezielle Wissen eines Experten eine zufriedenstellende, formalisierte Darstellung vorliegt, beispielsweise aufgrund von Ausgangssignalen Neuronaler Netze oder wissensbasierter Systeme.

Bei einer anderen Weiterbildung der Erfindung werden Basis-Verarbeitungsprozeduren zur Bearbeitung der Bildobjekte und für die Anwendung des Verfahrens und spezifische Analyse-, Diagnose-, Kalibrierungs- und Schnittstellen-Prozeduren, insbesondere auf dem Rechner, bereitgestellt. Kern des Verfahrens ist die Kopplung eines durch autostereoskopische Visualisierung gestützten Prozesses, der durch Basisverarbeitungsprozeduren wie Alignment, Filtern, Dekonvolution, Bitmapping, usw. vorverarbeitet wird. Spezifische Verarbeitungsprozeduren ermöglichen die 3D-Manipulation, die manuelle Segmentation, Vermessung und die morphometrische Auswertung. Über eine in die dreidimensionale Darstellung eingeblendete Menüführung ist eine dialogorientierte, interaktive Kopplung von manuellen und automatischen Teilprozessen möglich, um ein Analyse- und Diagnosemodell mit ausreichender Performance zu erstellen.

Bei einer besonders vorteilhaften Weiterbildung der Erfindung erfolgt die dreidimensionale Darstellung autostereoskopisch, wobei das Bilderzeugungsmittel ein Bildschirm ist, vor dem die dreidimensionale Darstellung im Bildraum zu schweben scheint. Die Auswahleinrichtung ist ein 3D-Pointer oder ein Zeigestift, über den ein bestimmter Bildpunkt im virtuellen Bildraum angezeigt und über einen Taster am Zeigestift ausgewählt werden kann.

Weitere vorteilhafte Ausgestaltungen der Erfindung ergeben sich aus den Unteransprüchen und der Beschreibung. Drei Ausführungsbeispiele der Erfindung werden nachfolgend beschrieben.

Bei einem ersten Ausführungsbeispiel der Erfindung wird das Verfahren bei der Diagnose von Hirntumoren, Epilepsien oder ähnlichen Krankheiten in der Medizin eingesetzt. Über Computer-Tomographie, Magnetspin-Tomographie oder Röntgenverfahren wird der Kopf eines Patienten analysiert und die Ergebnisse für die dreidimensionale Darstellung herangezogen. Bei dem Verfahren können beispielsweise Tumore über ihre Schattierung in den Röntgenaufnahmen automatisch durch wissensbasierte Systeme lokalisiert und vermessen werden. Mit Hilfe des Pointers können auch interessierende Bildobjekte, d.h. Bereiche in denen ein Tumor zu vermuten ist, segmentiert, ausgeschnitten und mit Fremdfarben vergrößert dargestellt werden. Auf diese Weise läßt sich die medizinische Diagnose wesentlich verbessern.

Bei einem zweiten Ausführungsbeispiel der Erfindung wird ein Tomogramm mittels Positronenemissions-Tomographie (PET) erstellt und daraus eine dreidimensionale Darstellung erzeugt. Bei der manuellen Segmentation und Vermessung wird zu der Beurteilung der Topologie des Tumors das rekonstruierte Bild autostereoskopisch dargestellt. Die für die Prüfung relevanten Objektbereiche werden manuell segmentiert, die morphologischen Merkmale ermittelt und vermessen. Außerdem entstehen daraus Referenzobjekte für eine Lemmenge im Rahmen eines kognitiven Modells des Analyse- oder Diagnoseproblems. Bei der automatischen Segmentation und Vermessung erfolgt die Beurteilung auf der Basis des zuvor ermittelten Diagnosemodells. Dies schließt die automatische Segmentation und Vermessung relevanter Teilbereiche im Bildobjekt ein. Interaktiv kann über einen manuellen Teilprozeß das Diagnosemodell, z.B. unter Zuhilfenahme eines Neuronalen Netzes, ermittelt und schritthaltend aktualisiert werden.

Ein drittes Ausführungsbeispiel des erfindungsgemäßen Verfahrens betrifft die Qualitätssicherung bei der Produktion von elektronischen Geräten. Zur automatischen Inspektion von Lötstellen mit einem Durchsatz von einigen Tausend Lötstellen/min sind übliche Prüfkriterien die Lotverteilung, Lotmenge, Bauteilpositionierung und Fehler im Lotvolumen. Über einen mit einem Rechner verbundenen Bildschirm wird eine autostereoskopische, im Bildraum vor dem Bildschirm schwebende dreidimensionale Darstellung erzeugt. Die 3D-Grafik ist eine Vektorgrafik, wodurch die Lötstellen mit hoher Auflösung darstellbar sind. Mit Hilfe eines 3D-Pointers wird die dreidimensionale Darstellung segmentiert und vermessen. Zur Beurteilung der Qualitätsmerkmale wird das aus Röntgenaufnahmen oder einer Tomographie ermittelte dreidimensionale Bild autostereoskopisch dargestellt. Die für die Prüfung relevanten Objektbereiche werden manuell segmentiert, die morphologischen Merkmale werden ermittelt und vermessen. Vermessene Bildobjekte können als Referenzobjekte für Lernmengen im Speicher des Rechners abgelegt werden. So können beispielsweise Eingangsdaten für Neuronale Netze ermittelt werden mit dem Ziel einer automatischen Segmentierung oder Vermessung auf der Basis eines Diagnosemodells, beispielsweise einer Kombination von wissensbasierten Systemen und Neuronalen Netzen. Die automatische Segmentation und/oder Vermessung kann mit der manuellen Segmentation und/oder Vermessung interaktiv verbunden sein. Ebenso ist es möglich artifizielle Bildobjekte, wie z.B. eine gewünschte Lotverteilung, mit dem Stift als Referenzobjekte in den dreidimensionalen Bildraum zu zeichnen.

Die Aufgabe wird bezüglich einer Vorrichtung erfindungsgemäß durch die Merkmale des Patentanspruchs 14 gelöst. Danach ist die Zeigeeinrichtung frei im Bildraum bewegbar und zur Übermittlung ihrer Position ein Übertragungsmittel aufweist, wobei der Rechner der Zeigeeinrichtung entsprechend ihrer Position einen Bildpunkt der stereoskopisch dreidimensionalen Darstellung zuweist.

Erfindungsgemäß ist erkannt worden, daß ein Zerlegen der dreidimensionalen Darstellung zur Auswahl und zum Bearbeiten einzelner Objekte nicht notwendig ist. Mittels der Zeigeeinrichtung läßt sich im virtuellen Bildraum ein Objekt auswählen. Dabei ist die Zeigeeinrichtung nicht auf einer zweidimensionalen Unterlage geführt, sondern durch den Bediener frei im Raum bewegbar. Die Position der Zeigeeinrichtung wird über ein Übertragungsmittel an den Rechner übermittelt. Die Bewegung im Raum erfolgt dabei bspw. durch die Hand des Bedieners vor dem Körper. Eine Veränderung der Lage der Zeigeeinrichtung im Raum führt dabei zur Verlagerung eines virtuellen Cursors im virtuellen Bildraum. Das Verfahren ist vorteilhaft auf stereoskopische Verfahren unter Verwendung einer Sichtbrille anwendbar, wie bspw. die Anaglyphen-Technik, bei der zwei Perspektiven für je ein Auge in Rot- und Grün-Darstellung erzeugt werden, oder der Shutter-Technik, bei der die Perspektiven nacheinander dargestellt werden und über die Sichtbrille augenrichtig zuschaltbar sind.

Besonders vorteilhaft läßt sich die Erfindung aber auf autostereoskopische dreidimensionale Darstellungen anwenden, bei denen keine zusätzliche Sichtbrille erforderlich ist. Dabei werden die Perspektiven für beide Augen gleichzeitig dargestellt und optische Mittel erzeugen jeweils eine Perspektive für das entsprechende Auge. Dazu wird die Betrachterbewegung erfaßt und beide Perspektiven werden bspw. durch Prismen dem einzelnen Auge zugeführt. Über die Bewegung der Zeigeeinrichtung wird erfindungsgemäß ein Bildpunkt im dargestellten dreidimensionalen Objekt ausgewählt, bearbeitet und verändert. Der Rechner ermittelt ausgehend von der Bewegung der Zeigeeinrichtung die dazugehörenden Bildpunkte der dreidimensionalen Darstellung.

Bei einer bevorzugten Weiterbildung der Erfindung weist der Rechner der Zeigeeinrichtung genau den Bildpunkt zu, auf den die Zeigeeinrichtung im virtuellen Bildraum ausgerichtet ist. Besonders bei autostereoskopischer Darstellung kann die Zeigeeinrichtung im virtuellen Bildraum, d.h. innerhalb der dreidimensionalen Darstellung bewegbar sein. Auf diese Weise kann mit der Zeigeeinrichtung ein dreidimensionales Objekt ausgewählt werden. Die Position der Zeigeeinrichtung wird durch das Übertragungsmittel an den Rechner übermittelt, der den entsprechenden Bildpunkt der dreidimensionalen Darstellung berechnet und insbesondere über einen Cursor im dreidimensionalen Objekt anzeigt.

Erfindungsgemäß weist die Zeigeeinrichtung ein Übertragungsmittel auf. Bevorzugt erfolgt die Datenübertragung über eine Sende- und/oder Empfangseinheit kabellos. Dazu werden Positions- und Steuersignale über eine Funk- oder Infrarotübertragungsstrecke von der Zeigeeinrichtung zur Empfangseinheit am Rechner übertragen. Die Position im Raum kann jedoch auch über einen Metalldetektor, der einen Metallkopf der Zeigeeinrichtung erfaßt, feststellbar sein. Schließlich könnte das Übertragungsmittel auch ein einfaches Anschlußkabel zwischen Zeigeeinrichtung und Rechner sein.

Bevorzugt ist die Zeigeeinrichtung als Zeigestift, insbesondere mit einer im Raum ortbaren Spitze, ausgebildet. Der Zeigestift kann dabei die Größe und Form eines Kugelschreibers aufweisen, wobei der Zeigestift selbst als Antenne für die Sendeund/oder Empfangseinheit ausgebildet ist. Auf einfache Weise läßt sich die Zeigeeinrichtung in eine Position im virtuellen Bildraum führen, so daß ein dreidimensionales Objekt bearbeitet und verändert werden kann.

Die Zeigeeinrichtung kann zumindest ein Auswahlmittel, insbesondere einen Taster, zum Auswählen eines Bildpunktes und/oder zum Starten einer Bearbeitung aufweisen. Über das Auswahlmittel kann der Start- bzw. Endpunkt einer Bewegung im virtuellen Bildraum oder die Auswahl eines bestimmten dreidimensionalen Objektes festgelegt werden. Über das Auswahlmittel können aber auch aus einer virtuell in den dreidimensionalen Bildraum eingeblendeten Menüführung über Anzeigefenster bestimmte Bearbeitungsprozeduren auswählbar sein.

Bei einer anderen Weiterbildung der Erfindung ist der Zeigeeinrichtung eine von unterschiedlichen Verarbeitungsprozeduren als virtueller Werkzeugkopf zuordenbar, um die dreidimensionale Darstellung zu bearbeiten. Als Verarbeitungsprozeduren sind bspw. Modellieren, wie Erhöhen oder Vertiefen von Konturen, Anbringen von Gravuren oder Texturen, Segmentieren, Filtern, Schraffieren, Einfärben oder Zeichnen vorgesehen. Entweder wird über den Rechner eine der Verarbeitungsprozeduren der Zeigeeinrichtung vorab zugewiesen, oder die Verarbeitungsprozedur wird während der Bearbeitung aus virtuell im Raum dargestellten Menuefenstern ausgewählt. Nach der Positionierung der Zeigeeinrichtung wird die Verarbeitungsprozedur, bspw. über einen Taster gestartet. Dabei kann der Taster durch anhaltende Betätigung zur Erzeugung von Linien oder zum Modellieren einsetzbar sein.

Die Veränderung der dreidimensionalen Darstellung durch die mit der Zeigeeinrichtung verknüpfte Verarbeitungsprozedur ist im Rechner berechenbar und, insbesondere in Echtzeit, auf dem Bildschirm darstellbar. Die Veränderungen durch die Zeigeeinrichtung werden dabei sofort angezeigt, so daß der Bediener eine Rückmeldung über die Bearbeitung der dreidimensionalen Darstellungen hat. Schließlich können die Veränderungen der dreidimensionalen Darstellungen auf dem Rechner abspeicherbar sein.

Die Zuweisung der Verarbeitungsprozedur an die Zeigeeinrichtung erfolgt bevorzugt über Tastatur oder über eine in die dreidimensionale Darstellung eingeblendete Menüführung z.B. über Pull-down-Menüs einer Bedieneroberfläche.

Im virtuellen Bildraum ist auf Anforderung ein Symbol einblendbar, das der Position der Zeigeeinrichtung entspricht. D.h. das Symbol ist auf dem der Zeigeeinrichtung zugeordneten Bildpunkt anzeigbar. Das Symbol ist bevorzugt ein blinkender Cursor, eine Hand oder ein Werkzeug. Bei medizinischer Anwendung ist bspw. ein Skalpell anzeigbar.

Die Positionierung der Zeigeeinrichtung ist bevorzugt durch einen virtuellen Maßstab im dreidimensionalen Bildraum oder andere Meßfunktionen unterstützbar. Dabei kann es sich um einen metrischen oder logarithmischen Maßstab handeln, der im dreidimensionalen Bildraum darstellbar ist. Zusätzlich können auch Ikonen oder Markierungselemente an der Darstellung durch die Zeigeeinrichtung anbringbar sein. Sowohl die Meßfunktionen als auch die Bearbeitungsprozeduren können in einer Bibliothek des Rechners abgelegt sein.

Die dreidimensionale Darstellung auf dem Bildschirm erfolgt bevorzugt autostereoskopisch. Dazu ist ein 3D-Bildschirm erforderlich, der je eine Perspektive für ein Auge erzeugt und diese durch optische Mittel für eines der beiden Augen speziell überarbeitet. Dabei entsteht eine dreidimensionale Darstellung, die vor dem Bildschirm im Bildraum zu schweben scheint.

Weitere vorteilhafte Ausführungsformen der Erfindung ergeben sich aus den Unteransprüchen und der Beschreibung. Zwei vorteilhafte Ausführungsformen der Erfindung werden nachfolgend beschrieben.

Die erfindungsgemäße Vorrichtung nach der ersten Ausführungsform weist einen Rechner, einen autostereoskopischen Bildschirm und eine 3D-Zeigeeinrichtung auf. Die Spitze der Zeigeeinrichtung enthält einen Infrarotsender, wodurch die Koordinaten der Spitze im Bildraum feststellbar sind und vom Rechner berechenbar sind. Über eine Tastatur des Rechners werden der Zeigeeinrichtung Verarbeitungsprozeduren zugeordnet, die als virtueller Werkzeugkopf auf der Spitze der Zeigeeinrichtung wirken. Dabei können auch bestimmte Parameter wie Größe, Art und Stärke der Veränderungen einstellbar sein. Die Verarbeitung wirkt sich, vom Rechner beeinflußt, auch in der autostereoskopisch präsentierten Darstellungen aus. Der Rechner verfügt dazu über eine schnelle Vektorgraphik, die die Veränderungen durch die Zeigeeinrichtung in der dreidimensionalen Darstellung anzeigt.

Die Vorrichtung weist bei einer zweiten Ausführungsform eine als 3D-Stift ausgebildete Zeigeeinrichtung, ein stereoskopisches Beobachtungssystem als Beobachtungs- und Übermittlungssystem für die Position des Stiftes oder des Operateurs, einen autostereoskopischen 3D-Bildschirm, ein Schnittstellensystem, ein Verarbeitungssystem in Form eines Computers und ein Kalbrierungssystem auf.

Der 3D-Stift ist bspw. mit einer oder mehreren Infrarotdioden ausgestattet und wird durch den Operateur im sensiblen Bildbereich entsprechend bewegt. Die Lichtpunkte der Infrarotdioden werden durch das Beobachtungssystem, das zwei Kameras aufweist, geortet. Die durch die Kameras aufgenommenen Positionen der Lichtpunkte wird vermessen und durch das Beobachtungssystem im Computer abgelegt. Ein zweiter Lichtpunkt, der von dem Lichtpunkt der 3D-Stiftspitze durch zeitliche, räumliche Struktur oder Farbe zu unterscheiden ist, ist vorgesehen, um neben der Position auch die Lage des Stiftes im Raum ermitteln zu können. Aufgrund des zweiten Lichtpunktes kann auch der Drehwinkel des Stiftes bei Drehbewegungen bestimmbar sein. Aufgrund der Lichtpunkte sieht der Operateur die Position und Lage des Stiftes in der optischen Wiedergabe durch den autostereoskopischen Bildschirm und kann dadurch den 3D-Stift entsprechend orientieren und bewegen.

Durch Kalibrierung kann eine für den Operateur spezifische Stereoabbildung ermittelt und für eine Darstellung eingesetzt werden. Außerdem können die Koordinaten der virtuellen Darstellung des Beobachtungssystems und des Operateurs mit dem Zeigestift aufeinander abgestimmt werden. Die aus dem Meßvorgang, bspw. durch die Kameras, ermittelte Metrik kann für die Gesamtdarstellung auf dem Bildschirm des Computers übernommen werden.

Die Position des Stiftes und damit des Operateurs kann evtl. über ein weiteres Stereokamera-System erfaßt werden. Dabei wird die Position des Operateurs für die Stereoabbildung bspw. so berechnet, daß das virtuelle Objekt stabil im Raum steht.

Der 3D-Stift kann ein ergonomisch gestaltetes, kugelschreiberartiges Gehäuse aufweisen, das ein bis fünf IR-Sendedioden enthält, die an einen oder mehrere mechanisch stabile Lichtleitfasern angekoppelt sind. Die IR-Sendedioden sind extern über Kabel oder durch Akkus, und damit unabhängig von elektrischen Leitern, mit elektrischem Strom versorgt.

Die IR-Sendedioden senden kontinuierliche oder modulierte Signale aus, wodurch zwei unterschiedliche Infrarotlichtmarken mit einem bestimmten Abstand zueinander im virtuellen Raum entstehen. Diese IR-Uchtmarken werden zur Bestimmung von Position und Lage des Stiftes aufgenommen und dekodiert.

Der 3D-Stift kann zwei Tasten aufweisen, wobei eine die Sendefunktion aktiviert und die zweite das Bestimmen mehrerer Bearbeitungsfunktionen, einschließlich Kalibrierung, Status über Kabel, Status über Sender, unidirektionaler oder bidirektionaler Empfang, ermöglicht.

Im einfachsten Fall ist lediglich ein Lichtpunkt zur Identifikation der 3D-Stiftspitze erforderlich. Die Auswahl der Bearbeitungsfunktionen kann dann aber nur unabhängig von der Lage des Stiftes erfolgen.

Das erfindungsgemäße Beobachtungssystem ist als stereoskopisches Zwei- oder Drei-Kamerasystem ausgebildet. Es kann auch ein weiteres Kamerasystem die Position, Blickrichtung oder den Augenabstand des Operateurs aufnehmen. Die Anordnung der Kamerasysteme definiert den sensiblen Bildraum, wobei durch Helligkeit und Tiefenschärfe eine Begrenzung dieses sensiblen Bildraums möglich ist.

Bevorzugt können für das Beobachtungssystem CCD-Kameras, schnelle Framegrabber, Bildspeicher, PCI-Bus-orientierte Erfassungs- und Verarbeitungstechniken eingesetzt werden.

Das Display ist als ein autostereoskopisches 3D-Display ausgebildet, wobei für den Betrachter die dargestellten Objekte in einem virtuellen Bildraum vor dem eigentlichen Display abgebildet scheinen.

Die digitale Schnittstelle hat die Kommunikation zwischen Stift und Beobachtungssystem und dem Computer zu gewährleisten. Diese Schnittstelle kann als Infrarotschnittstelle oder als herkömmliche, auf elektrischen Leitern basierende Schnittstelle ausgelegt sein.

Durch das Verarbeitungssystems, bspw. den Computer, wird die aktuelle Stiftposition erfaßt, gespeichert und nach Bedarf im Zusammenhang mit grafischen Darstellungen verwendet.

Das Kalibrierungssystem hat die Aufgabe, die Abstimmung und Transformation der Bezugssysteme zu gewährleisten. Der 3D-Stift wird im Beobachterraum von den Kamerasystemen erfaßt und im Bildraum vor dem autostereoskopischen Bildschirm dargestellt. Das Kalibrierungssystem gleicht die autostereoskopische Darstellung im Bezug auf die reale Position des 3D-Stifts an. Das Kalibrierungssystem läßt aber Einstellungen der Abbildungen auf individuelle Abbildungseigenschaften des Operateurs zu. Dazu wird dem Operateur ein virtueller 3D-Eichraum zur Verfügung gestellt, in dem der Operateur durch Anklicken ausgewählter Punkte die Kalibrierung vornimmt. Dieser Eichraum kann die Form eines karthesischen Würfelraums aufweisen.

Bei morphometrischen Aufgaben ist eine Skalierung des sensiblen Bildraums erforderlich, in dem die Position des Zeigestifts erfaßt wird. Dies kann durch das Einblenden definierter Skalen in die Koordinaten und die entsprechende Verrechnung in den zu vermessenden Bildern durch das Kalibrierungssystem erfolgen.

Bei der Kalibrierung wird die Kameraabbildung der realen Zeigeeinrichtung, bspw. eines 3D-Stiftes, mit der Abbildung im virtuellen Objektraum verglichen. Ein im virtuellen Objektraum gezeichneter Eichkörper, z.B. ein Oktaeder, kann an Bildpunkten angeklickt werden, die vom Operateur stereoskopisch gesehen werden und diese Punkte sind dann über das Beobachtungssystem erfaßbar und mit Hilfe des Rechners für die Wiedergabe der Stereobilder verrechenbar. Die Position der Zeigeeinrichtung, wie vom Operateur gesehen, durch das Beobachtungssystem reflektiert und kann durch Bewegung des Stiftes und Anklicken mit der Eichtaste im Fall der Übereinstimmung der Positionen aufeinander abgeglichen werden. Auf diese Weise kann der bedienende Operateur das System vor Beginn einer Anwendung selbst unter Verwendung einer Eichtaste auf der Zeigeeinrichtung selbst kalibrieren.

Die erfindungsgemäße Vorrichtung kann für Gestaltungsaufgaben in der medizinischen Diagnostik und Therapie sowie bei technischen Anwendungen, bspw. CAD sowie im künstlerischen und handwerklichen 3D-Design eingesetzt werden. Die Zeigeeinrichtung ist insbesondere für interaktive Aufgaben bspw. beim Hervorheben oder Korrigieren von Darstellungen auf dem Rechner ablaufender Programme einsetzbar. Dabei erfolgt die Bearbeitung in der autostereoskopischen Darstellung, was eine Veränderung der auf dem Rechner gespeicherten Bilddaten zur Folge hat.

## Patentansprüche

1. Verfahren zur Bearbeitung von Bildobjekten in stereoskopisch dreidimensionalen Darstellungen, wobei ein Bildobjekt durch ein Bilderzeugungsmittel in einem virtuellen Bildraum dargestellt wird, Bildpunkte des stereoskopisch dreidimensionalen Bildraums durch eine Auswahleinrichtung erreichbar sind und dem Bildobjekt durch einen Rechner der Position entsprechende Koordinatenwerte zugeordnet werden,
**dadurch gekennzeichnet, dass** zumindest ein räumlicher Teilbereich des Bildobjekts durch die Auswahleinrichtung für die Bearbeitung markiert wird, dass die Auswahleinrichtung frei im Bildraum bewegt wird und der Rechner der Auswahleinrichtung entsprechend ihrer Position einen Bildpunkt der stereoskopisch dreidimensionalen Darstellung zuweist.

2. Verfahren nach Anspruch 1, **dadurch gekennzeichnet, dass** das markierte Bildobjekt in bezug zu anderen, im Bildraum dargestellten Bildobjekten segmentiert wird, wobei die Auswahleinrichtung zur Segmentierung im virtuellen Bildraum auf das Bildobjekt gerichtet oder entlang der Begrenzungsbereiche des Bildobjekts geführt werden kann.

3. Verfahren nach Anspruch 1 oder 2, **dadurch gekennzeichnet, dass** das markierte Bildobjekt hervorgehoben, insbesondere gefärbt oder vergrößert wird.

4. Verfahren nach Anspruch 1, **dadurch gekennzeichnet, dass** der markierte Teilbereich des Bildobjekts vermessen wird.

5. Verfahren nach einem der Ansprüche 1 bis 4, **dadurch gekennzeichnet, dass** der Teilbereich des Bildobjekts aus der dreidimensionalen Darstellung ausgeschnitten und gesondert dargestellt wird.

6. Verfahren nach einem der Ansprüche 1 bis 5, **dadurch gekennzeichnet, dass** das Bildobjekt durch Verarbeitungsprozeduren des Rechners segmentiert und/oder vermessen wird und Daten zur Erzeugung von Referenzobjekten in einer Speichervorrichtung des Rechners abgelegt werden.

7. Verfahren nach einem der Ansprüche 1 bis 6, **dadurch gekennzeichnet, dass** insbesondere aufgrund von Referenzobjekten, eine automatische Segmentation und Vermessung relevanter Bildobjektbereiche im dreidimensionalen Bildraum durchgeführt werden.

8. Verfahren nach einem der Ansprüche 1 bis 7, **dadurch gekennzeichnet, dass** bei der Segmentation, Vermessung oder Auswahl eines spezifischen Bildobjekts in der Darstellung bildanalytische, kognitive und wissensbasierte Systeme, insbesondere auch Neuronale Netze, eingesetzt werden.

9. Verfahren nach einem der Ansprüche 1 bis 8, **dadurch gekennzeichnet, dass** eine manuelle Segmentation bzw. Vermessung relevanter Teilbereiche des Bildobjekts oder auch die Gestaltung artifizieller Bildobjekte im dreidimensionalen Bildraum durchgeführt wird.

10. Verfahren nach einem der Ansprüche 1 bis 9, **dadurch gekennzeichnet, dass** der Rechner Verarbeitungsprozeduren vorsieht, wie Vorverarbeiten durch Filtern oder Bilddatenkomprimierung oder wie morphometrisches Auswerten, Kalibrieren oder kognitives Modellieren.

11. Verfahren nach einem der Ansprüche 1 bis 10, **dadurch gekennzeichnet, dass** zur Bearbeitung der Bildobjekte Basis-Verarbeitungsprozeduren und für die Anwendung des Verfahrens spezifische Analyse-, Diagnose-, Kalibrierungs- und Schnittstellen-Prozeduren, insbesondere auf dem Rechner, bereitgestellt sind.

12. Verfahren nach einem der Ansprüche 1 bis 11, **dadurch gekennzeichnet, dass** die stereoskopisch dreidimensionale Darstellung eine autostereoskopische Darstellung ist, wobei das Bilderzeugungsmittel ein Bildschirm ist, vor dem die dreidimensionale Darstellung im Bildraum zu schweben scheint.

13. Verfahren nach einem der Ansprüche 1 bis 12, **dadurch gekennzeichnet, dass** die Auswahleinrichtung eine Zeigestift ist, über den ein bestimmter Bildpunkt im virtuellen Bildraum angezeigt und, insbesondere über einen Taster am Zeigestift, ausgewählt werden kann, wobei mit der Auswahleinrichtung artifizielle Bildobjekte im virtuellen Bildraum, z.B. als Referenzobjekte, gestaltet werden können.

14. Vorrichtung zum Bearbeiten und Verändern von stereoskopisch dreidimensionalen Darstellungen, die einen Rechner zum Erzeugen von Bilddaten, einen Bildschirm zur stereoskopisch dreidimensionalen Darstellung der Bilddaten in einem virtuellen Bildraum und eine Zeigeeinrichtung zur manuellen Beeinflussung der stereoskopisch dreidimensionalen Darstellung aufweist, insbesondere zur Anwendung des Verfahrens nach einem der Ansprüche 1 bis 13,
**dadurch gekennzeichnet, dass** die Zeigeeinrichtung frei im Bildraum bewegbar ist und zur Übermittlung ihrer Position ein Übertragungsmittel aufweist, wobei der Rechner der Zeigeeinrichtung entsprechend ihrer Position einen Bildpunkt der stereoskopisch dreidimensionalen Darstellung zuweist.

15. Vorrichtung nach Anspruch 14, **dadurch gekennzeichnet, dass** der Rechner der Zeigeeinrichtung genau den Bildpunkt zuweist, auf dem die Zeigeeinrichtung im virtuellen Bildraum ausgerichtet ist und/oder
wobei das Übertragungsmittel eine Sende- und/oder Empfangseinheit zur kabellosen Datenübertragung, bspw. mittels Funk- oder Infrarotsignalen, aufweist und/oder
wobei die Zeigeeinrichtung als Zeigestift, insbesondere mit einer im Raum ortbaren Spitze, ausgebildet ist und/oder
wobei die Zeigeeinrichtung zumindest ein Auswahlmittel, insbesondere einen Taster, zum Auswählen eines Bildpunktes und/oder zum Starten einer Bearbeitung aufweist und/oder
wobei der Zeigeeinrichtung eine von unterschiedlichen Verarbeitungsprozeduren als virtueller Werkzeugkopf zuordenbar ist, um die dreidimensionale Darstellung zu bearbeiten und/oder
wobei die Verarbeitungsprozeduren, bspw. Modellieren, wie Erhöhen oder Vertiefen von Konturen, Anbringen von Gravuren oder Texturen, Segmentieren, Filtern, Schraffieren, Einfärben oder Zeichnen umfassen und/oder
wobei die Veränderung der dreidimensionalen Darstellung durch die mit der Zeigeeinrichtung verknüpfte Verarbeitungsprozedur im Rechner berechenbar und, insbesondere in Echtzeit, auf dem Bildschirm darstellbar ist und/oder
wobei der Rechner der Zeigeeinrichtung auf Anforderung, insbesondere über eine Tastatur des Rechners, eine Verarbeitungsprozedur zuweist.

16. Vorrichtung nach Anspruch 14 oder 15, **dadurch gekennzeichnet, daß** entsprechend der Position der Zeigeeinrichtung ein Symbol im virtuellen Bildraum anzeigbar ist, wobei das Symbol insbesondere ein blinkender Cursor, eine Hand oder ein Werkzeug, bspw. ein Skalpell, ist, wobei das Symbol vorzugsweise auf Anforderung im virtuellen Bildraum darstellbar ist.

17. Vorrichtung nach einem der Ansprüche 14 bis 16, **dadurch gekennzeichnet, dass** die Meßfunktionen, die Symbole oder die Verarbeitungsprozeduren in einer Bibliothek des Rechners abgelegt sind und/oder
dass die Positionierung der Zeigeeinrichtung durch einen virtuellen Maßstab im dreidimensionalen Bildraum oder andere Meßfunktionen unterstützbar ist und/oder
dass die stereoskopisch dreidimensionale Darstellung auf dem Bildschirm autostereoskopisch ist und/oder
dass die Zeigeeinrichtung eine Infrarot-Sendeeinrichtung aufweist und/oder zwei Lichtquellen, die voneinander beabstandete Lichtmarken am Zeiger erzeugen, die zur Bestimmung der Position und Lage der Zeigeeinrichtung auswertbar sind und/oder
dass Infrarot-Stereokameras zur Erfassung der mindestens einen Lichtmarke vorgesehen sind, insbesondere zur Erfassung der Position, Lage oder des Drehwinkels der Zeigeeinrichtung und/oder
dass zur Bestimmung des Drehwinkels der Zeigeeinrichtung mehrere Leuchtdioden, insbesondere mit unterschiedlicher Farbe oder unterschiedlichen Signalen, vorgesehen sind, die in Echtzeit stereoskopisch erfaßbar sind und woraus sich der Drehwinkel der Zeigeeinrichtung bestimmen lässt und/oder
dass der virtuelle Bildraum durch mehrere Kameras aufgespannt wird und vor dem 3D-Display angeordnet und insbesondere durch die Schärfentiefe der Kameras oder deren Ausrichtung begrenzt ist und/oder
dass bei der Kalibrierung die reale Zeigeeinrichtung mit der im virtuellen Objektraum dargestellten Abbildung abgleichbar ist.

## Claims

1. Method for processing imaged objects in stereoscopic three-dimensional displays, wherein a pixel is displayed by an image generating means in a virtual image space, pixels of the stereoscopic three-dimensional image space can be reached by a selection device and co-ordinate values are allocated by a computer to the imaged object according to the position, **characterised in that** at least a spatial part-zone of the imaged object is marked by the selection device for processing, that the selection device is moved freely in the image space and the computer allocates a pixel of the stereoscopic three-dimensional display to the selection device according to its position.

2. Method as claimed in Claim 1, **characterised in that** the marked imaged object is segmented with respect to other imaged objects displayed in the image space, wherein the selection device is directed onto the imaged object for segmentation in the virtual image space or can be guided along the boundary zones of the imaged object.

3. Method as claimed in Claim 1 or 2, **characterised in that** the marked imaged object is emphasised, particularly coloured or enlarged.

4. Method as claimed in Claim 1, **characterised in that** the marked part-zone of the imaged object is measured.

5. Method as claimed in one of Claims 1 to 4, **characterised in that** the part-zone of the imaged object is cut out from the three-dimensional display and displayed separately.

6. Method as claimed in one of Claims 1 to 5, **characterised in that** the imaged object is segmented and/or measured by processing procedures of the computer and data for generating reference objects are stored in a memory device of the computer.

7. Method as claimed in one of Claims 1 to 6, **characterised in that** in particular on the basis of reference objects an automatic segmentation and measurement of relevant zones of the imaged object are carried out in the three-dimensional image space.

8. Method as claimed in one of Claims 1 to 7, **characterised in that** image-analysing, cognitive and knowledge-based systems, and also in particular neuronal networks, are used in the segmentation, measurement or selection of a specific imaged object in the display.

9. Method as claimed in one of Claims 1 to 8, **characterised in that** a manual segmentation and/or measurement of relevant part-zones of the imaged object or also the configuration of artificial imaged objects in the three-dimensional image space is carried out.

10. Method as claimed in one of Claims 1 to 9, **characterised in that** the computer provides processing procedures such as pre-processing by filtering or image data compression or such as morphometric evaluation, calibration or cognitive modelling.

11. Method as claimed in one of Claims 1 to 10, **characterised in that** for the processing of the imaged objects basic processing procedures are provided and for the application of the method specific analytical, diagnostic, calibration and interface procedures are provided, particularly on the computer.

12. Method as claimed in one of Claims 1 to 11, **characterised in that** the stereoscopic three-dimensional display is an autostereoscopic display, the image generating means being a display screen before which the three-dimensional display appears to hover in the image space.

13. Method as claimed in one of Claims 1 to 12, **characterised in that** the selection device is a pointer pen via which a specific pixel is displayed in the virtual image space and can be selected, particularly via a key on the pointer pen, whereby artificial imaged objects can be configured with the selection device in the virtual image space, e.g. as reference objects.

14. Device for processing and modifying stereoscopic three-dimensional displays which has a computer for generating image data, a display screen for stereoscopic three-dimensional display of the image data in a virtual image space and a pointer for manually influencing the stereoscopic three-dimensional display, particularly for the application of the method as claimed in one of Claims 1 to 13, **characterised in that** the pointer is freely movable in the image space and has a transmission means for transmitting its position, wherein the computer allocates a pixel of the stereoscopic three-dimensional display to the pointer according to its position.

15. Device as claimed in Claim 14, **characterised in that** the computer allocates to the pointer precisely the pixel with which the pointer is aligned in the virtual image space, and/or
wherein the transmission means has a transmitting and/or receiving unit for cable-free data transmission, e.g. by means of radio or infrared signals, and/or
wherein the pointer is constructed as a pointer pen, particularly with a tip which can be located in the space, and/or
wherein the pointer has at least one selection means, particularly a key, for selecting a pixel and/or for starting a processing operation, and/or
wherein one of various processing procedures can be assigned to the pointer as a virtual tool head in order to process the three-dimensional display, and/or
wherein the processing procedures comprise for example modelling, such as raising or lowering of contours, application of engravings or textures, segmentation, filtering, hatching, colouring or drawing, and/or
wherein the modification of the three-dimensional display can be calculated in the computer by the processing procedure associated with the pointer and can be displayed on the display screen, particularly in real time, and/or
wherein the computer allocates a processing procedure to the pointer on request, particularly via a keyboard of the computer.

16. Device as claimed in Claim 14 or 15, **characterised in that** according to the position of the pointer a symbol can be displayed in the virtual image space, the symbol being a flashing cursor, a hand or a tool, for example a scalpel, and the symbol can preferably be displayed upon request in the virtual image space.

17. Device as claimed in one of Claims 14 to 16, **characterised in that** the measurement functions, the symbols or the processing procedures are stored in a library of the computer, and/or
that the positioning of the pointer can be supported by a virtual scale in the three-dimensional image space or other measurement functions, and/or
that the stereoscopic three-dimensional display on the display screen is autostereoscopic, and/or
that the pointer has an infrared transmission device and/or two light sources which generate light marks on the pointer which are spaced from one another and which can be evaluated in order to determine the position and orientation of the pointer, and/or
that infrared stereoscopic cameras are provided in order to detect the at least one light mark, particularly in order to detect the position, orientation or angle of rotation of the pointer, and/or
that in order to determine the angle of rotation of the pointer a plurality of light-emitting diodes, particularly with different colours or different signals, are provided, which can be detected stereoscopically in real time and from which the angle of rotation of the pointer can be determined, and/or
that the virtual image space is spanned by a plurality of cameras and is disposed before the 3D display and in particular is defined by the depth of focus of the camera or its orientation, and/or
that in the calibration the real pointer can be compared with the image displayed in the virtual object space.

## Revendications

1. Procédé pour le traitement d'objets-images dans des représentations stéréoscopiques tridimensionnelles, un objet-image étant représenté, par un moyen de génération d'images, dans un espace-image virtuel, des points d'image de l'espace-image stéréoscopique tridimensionnel pouvant être atteints par un dispositif d'échantillonnage et des valeurs de coordonnées correspondant à la position étant adjointes à l'objet-image par un ordinateur,
**caractérisé en ce qu'**au moins une zone partielle spatiale de l'objet-image est marquée pour le traitement par le dispositif d'échantillonnage, que le dispositif d'échantillonnage est déplacé librement dans l'espace-image et l'ordinateur assigne au dispositif d'échantillonnage, en correspondance de sa position , un point d'image de la représentation stéréoscopique tridimensionnelle.

2. Procédé selon la revendication 1,
**caractérisé en ce que** l'objet-image marqué est segmenté par rapport à d'autres objets-images représentés dans l'espace-image, le dispositif d'échantillonnage pouvant être, pour la segmentation, dirigé sur l'objet-image dans l'espace-image virtuel ou guidé le long des zones de délimitation de l'objet-image.

3. Procédé selon la revendication 1 ou 2,
**caractérisé en ce que** l'objet-image marqué est accentué, en particulier coloré ou agrandi.

4. Procédé selon la revendication 1,
**caractérisé en ce que** la zone partielle marquée de l'objet-image est mesurée.

5. Procédé selon l'une des revendications 1 à 4,
**caractérisé en ce que** la zone partielle de l'objet-image est découpée dans la représentation tridimensionnelle et représentée séparée.

6. Procédé selon l'une des revendications 1 à 5,
**caractérisé en ce que** l'objet-image est segmenté et/ou mesuré par des procédures de traitement de l'ordinateur et des données pour la génération d'objets de référence sont classées dans un dispositif de mémoire de l'ordinateur.

7. Procédé selon l'une des revendications 1 à 6,
**caractérisé en ce que** qu'une segmentation et une mesure automatiques de zones d'objets-images significatives sont effectuées dans l'espace-image tridimensionnel, en particulier sur la base d'objets de référence.

8. Procédé selon l'une des revendications 1 à 7,
**caractérisé en ce que**, dans le cas de la segmentation, de la mesure ou du choix d'un objet-image spécifique, des systèmes analytiques d'image, cognitifs et basés sur la connaissance, en particulier aussi des réseaux neuronaux, sont mis en oeuvre dans la représentation.

9. Procédé selon l'une des revendications 1 à 8,
**caractérisé en ce qu'**une segmentation ou respectivement une mesure manuelle de zones partielles significatives de l'objet-image ou également la création d'objets-images artificiels est effectuée dans l'espace-image tridimensionnel.

10. Procédé selon l'une des revendications 1 à 9,
**caractérisé en ce que** l'ordinateur prévoit des procédures de traitement, telles que des prétraitements par des filtres ou une compression de données d'images ou comme une évaluation morphométrique, un calibrage ou un modelage cognitif.

11. Procédé selon l'une des revendications 1 à 10,
**caractérisé en ce que** des procédures de traitement de base sont mises à disposition pour le traitement de l'image et des procédures spécifiques d'analyse, de diagnostic, de calibrage et d'interface pour la mise en oeuvre du procédé, en particulier sur l'ordinateur.

12. Procédé selon l'une des revendications 1 à 11,
**caractérisé en ce que** la représentation stéréoscopique tridimensionnelle est une représentation autostéréoscopique, le moyen de génération d'images étant un écran devant lequel la représentation tridimensionnelle dans l'espace-image paraît être suspendue.

13. Procédé selon l'une des revendications 1 à 12,
**caractérisé en ce que** le dispositif d'échantillonnage est un stylo de marquage par lequel un point d'image déterminé est affiché dans l'espace-image virtuel et peut être échantillonné en particulier par une touche sur le stylo de marquage, des objets-images artificiels pouvant être créés par le dispositif d'échantillonnage, par exemple en tant qu'objets de référence.

14. Dispositif de traitement et de modification de représentations stéréoscopiques tridimensionnelles, qui présente un ordinateur pour engendrer des données d'images, un écran pour la représentation stéréoscopique tridimensionnelle des données d'image dans un espace-image virtuel et un dispositif d'affichage pour influencer manuellement la représentation tridimensionnelle, en particulier pour la mise en oeuvre du procédé selon les revendications 1 à 13,
**caractérisé en ce que** le dispositif d'affichage est mobile librement dans l'espace-image et présente un moyen de transmission pour transmettre sa position, l'ordinateur assignant au dispositif d'affichage, en correspondance de sa position, un point d'image de la représentation stéréoscopique tridimensionnelle.

15. Dispositif selon la revendication 14,
**caractérisé en ce que** l'ordinateur assigne au dispositif d'affichage exactement le point d'image sur lequel le dispositif d'affichage est pointé et/ou
le moyen de transmission présentant une unité d'émission et/ou de réception pour une transmission de données sans câble, par exemple au moyen de signaux radioélectriques ou infrarouges et/ou
le dispositif d'affichage étant réalisé sous forme de stylo de marquage, en particulier avec une pointe détectable et/ou
le dispositif d'affichage présentant au moins un moyen d'échantillonnage pour échantillonner un point d'image et/ou pour démarrer un traitement et/ou
au dispositif d'affichage pouvant être adjointe une tête d'outil virtuelle en tant que procédures de traitement différentes pour traiter la représentation tridimensionnelle et/ou
les procédures de traitement comprenant, par exemple un modelage, comme un accroissement ou un approfondissement de contours, une adjonction de gravures ou de textures, une segmentation, une filtration, un hachurage, une coloration ou un marquage et/ou
la modification de la représentation tridimensionnelle étant calculable dans l'ordinateur par la procédure de traitement connectée par le dispositif d'affichage et pouvant être représentée, en particulier en temps réel, sur l'écran et/ou
l'ordinateur assignant au dispositif d'affichage à la demande, en particulier par un clavier de l'ordinateur, une procédure de traitement.

16. Dispositif selon la revendication 14 ou 15,
**caractérisé en ce qu'**un symbole peut être affiché dans l'espace-image virtuel en correspondance de la position du dispositif d'affichage, le symbole étant en particulier un curseur clignotant, une main ou un outil, par exemple un scalpel, le symbole pouvant être affiché dans l'espace-image virtuel de préférence à la demande.

17. Dispositif selon l'une des revendications 14 à 16,
**caractérisé en ce que** les fonctions de mesure, les symboles et les procédures de traitement sont classées dans une bibliothèque de l'ordinateur et/ou
que le positionnement du dispositif d'affichage peut être assisté par une échelle virtuelle dans l'espace-image virtuel ou d'autres fonctions de mesure et/ou
que la représentation stéréoscopique tridimensionnelle sur l'écran est autostéréoscopique et/ou
que le dispositif d'affichage présente un dispositif émetteur à infrarouge et/ou deux sources lumineuses qui engendrent sur l'indicateur des marques lumineuses écartées l'une de l'autre qui sont lisibles pour déterminer la position et l'état du dispositif d'affichage et/ou
que des appareils photographiques stéréoscopiques à infrarouge sont prévues pour détecter au moins une marque lumineuse, en particulier pour détecter la position, l'état ou l'angle de rotation du dispositif d'affichage et/ou
que plusieurs diodes lumineuses, en particulier avec des couleurs différentes ou des signaux différents, sont prévues pour déterminer l'angle de rotation du dispositif d'affichage, qui peuvent être détectées stéréoscopiquement en temps réel et par lesquelles l'angle de rotation du dispositif d'affichage peut être déterminé et/ou
que l'espace-image virtuel est encadré par plusieurs appareils photographiques et est disposé devant l'affichage 3D et est délimité en particulier par la profondeur de champ de l'appareil photographique ou son orientation et/ou
que, lors du calibrage, le dispositif d'affichage réel peut être balancé par l'image représentée dans l'espace-objet virtuel.
